# EUROPÄISCHE PATENTANMELDUNG

(11) **EP 0 942 618 A2**
(43) Veröffentlichungstag der Anmeldung: **15.09.1999**
(21) Anmeldenummer: 99100456.5
(22) Anmeldetag: 11.01.1999
(51) Int. Cl.: H04Q 11/04

(54) **Schlüsselgerät für ISDN-Endgeräte**

(30) Priorität: 12.03.1998 DE 19810804
(71) Anmelder: SIEMENS AKTIENGESELLSCHAFT, 80333 München (DE)
(72) Erfinder: Enterrottacher, Anton, 80639 München (DE); Knebel, Hans Dr., 80999 München (DE)

(57) **Zusammenfassung**

Die Erfindung betrifft ein Schlüsselgerät (SG) für ISDN-Endgeräte (EG) mit ersten Mitteln (NS) zur Simulierung eines Netzwerkes zu einem Endgerät (EG) hin, mit zweiten Mitteln (TS) zur Simulierung eines Endgerätes (EG) zu einem Netzwerk (VE) hin, mit einer dazwischen geschalteten Steuerung (DKS) zur Abwicklung von Verbindungsaufgaben und zum Durchschalten der Daten, und mit einer Einrichtung (KS) zu deren Verschlüsselung.

## Beschreibung

Die Erfindung betrifft ein Schlüsselgerät für ISDN-Endgeräte.

Allgemeine Informationen über ISDN, das heißt Endgeräte, Schnittstellen und Anschlußtechnik sind beispielsweise in dem Buch: Alles über Euro-ISDN von Frey, Schönfeld, erschienen im Franzis-Verlag 1994, ISBN 3-7723-6773-9 beschrieben. Unter Endgeräten sollen auch Terminals oder Telekommunikationsanlagen verstanden werden.

Die ISDN-Endgeräte bauen die Verbindung zueinander auf und kommunizieren dazu direkt mit den zugehörigen Vermittlungen des ISDN-Netzes. Das zwischen Endgerät und zugehörige Vermittlung geschaltete Schlüsselgerät greift in diese Verbindung ein. Die Verbindungseigenschaften werden vom Endgerät bestimmt oder werden durch die Eigenschaften des Schlüsselgerätes limitiert. Im EURO-ISDN werden momentan folgende Fernmeldedienste angeboten: Sprachtelefonie 3,1 und 7 kHz, Bildtelefonie, Datenübermittlung, Telefax Gruppen 2/3 und 4, und Bildschirmtext.

Es ist denkbar, die B-Kanäle im Sprachdienst des ISDN direkt zu verschlüsseln. Eine Dechiffrierung dieser verschlüsselten Nachrichten ist aber auf der Empfangsseite, insbesondere bei der angesprochenen Sprachverschlüsselung, nicht mehr sichergestellt. Ein Grund hierfür sind die im ISDN grundsätzlich zugelassenen analogen Teilstrecken. Diese bewirken eine Analog-Digitalwandlung und umgekehrt. Dies stört in der offenen Kommunikation nicht weiter. Für die Verschlüsselung hat es jedoch fatale Folgen. Das zunächst digital vorliegende Kryptogramm wird analogisiert und dann wieder in einen digitalen Code zurückverwandelt. Hierbei kann aber nicht wieder das ursprünglich vorliegende Kryptogramm erzeugt werden, so daß eine empfangsseitige Dechiffrierung nicht mehr möglich ist.

Der Erfindung liegt die Aufgabe zugrunde, ein Schlüsselgerät anzugeben, durch das im ISDN-Netz für beliebige Fernmeldedienste bei einer gesicherten Übertragung eine Entschlüsselung der Daten auf der Empfangsseite ohne Einschränkungen ermöglicht wird.

Diese Aufgabe wird erfindungsgemäß durch die im Patentanspruch angegebenen Merkmale gelöst.

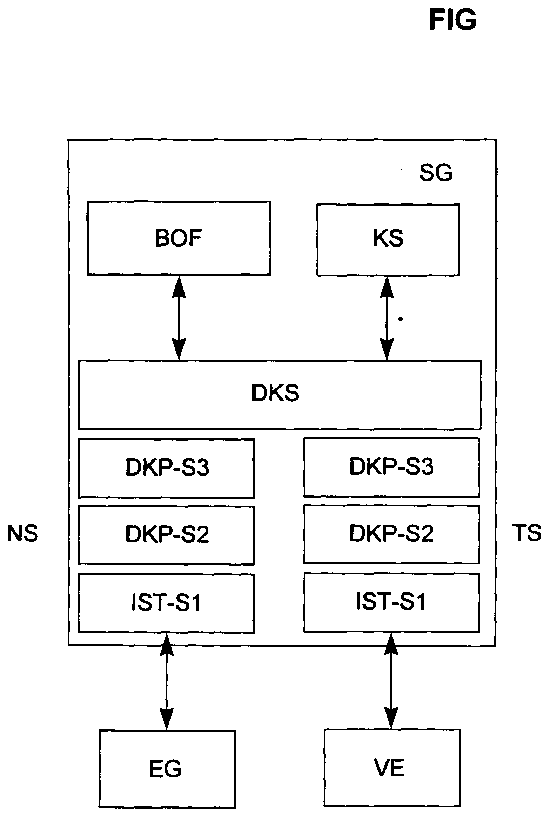

Im folgenden wird die Erfindung anhand eines in der Zeichnung dargestellten Ausführungsbeispieles beschrieben.

Das erfindungsgemäße Schlüsselgerät SG trennt die Verbindung von einem Endgerät EG zu einer Vermittlungseinrichtung VE vollständig auf. Vom Schlüsselgerät SG wird zur Vermittlungsseite (VE) hin ein Endgerät simuliert, und zum Endgerät EG hin werden die relevanten Eigenschaften einer ISDN-Vermittlung nachgebildet. Es entstehen sozusagen zwei unabhängige Verbindungen. Die Brücke zwischen diesen bildet das Schlüsselgerät SG selbst.

In der einzigen Figur ist das Schlüsselgerät SG dargestellt, das zwischen das Endgerät EG und die Vermittlungseinrichtung VE geschaltet ist. Zum Endgerät EG hin weist das Schlüsselgerät eine Netzwerkssimulation NS und zur Vermittlungseinrichtung VE hin eine Terminalsimulation TS auf.

Die Netzwerkssimulation NS ist durch einen ISAC-Treiber-Schicht 1 IST-S1 und zwei D-Kanal-Protokolle-Schicht 2 und Schicht 3 DSKP-S2 beziehungsweise DSKP-S3 realisiert. Die Implementierung des D-Kanal-Protokolls Schicht 1, 2 und 3 auf der Endgeräteseite des Schlüsselgerätes SG simuliert ein Netzwerk und stellt die Verbindung zum Endgerät EG her. Es können mehrere Verbindungen (mehrere Links der Schicht 2, mehrere Transaktionen der Schicht 3) gleichzeitig abgewickelt werden.

Die Terminalsimulation TS ist ebenfalls durch ISAC-Treiber-Schicht 1 IST-S1, sowie die D-Kanal-Protokolle-Schicht 2 und 3 DSKP-S2 beziehungsweise DSKP-S3 realisiert. Die Implementierung des D-Kanal-Protokolls Schicht 1, 2 und 3 auf der Netzseite des Schlüsselgerätes SG simuliert ein beziehungsweise mehrere Endgeräte und stellt die Verbindung zum Netz beziehungsweise zur Vermittlungseinrichtung VE her. Es können mehrere Verbindungen (mehrere Links der Schicht 2, mehrere Transaktionen der Schicht 3) gleichzeitig abgewickelt werden.

In der Schicht 1 des D-Kanal-Protokolls (ISAC-S1) erfolgt die Bitübertragung der binären Signale zwischen Netz, das heißt der ISDN-Vermittlungseinrichtung, und den Endeinrichtungen.

In der Schicht 2 des D-Kanal-Protokolls DKP-S2 werden die Funktionen Fehlerüberwachung, Übertragungs- und Formatfehler, das Veranlassen einer neuen Verbindung im Fehlerfall und Nachrichtenübermittlung der Zeichengabeinformationen dargestellt.

In der Schicht 3 des D-Kanal-Protokolls DKP-S3 wird die eigentliche Zeichengabe abgewickelt. Die verschiedenen Erfordernisse beziehungsweise Belange der Zeichengabe für die unterschiedlichen Anwender eines ISDN-Anschlusses, wie beispielsweise die Verbindungssteuerung für Mehrgeräteanschlüsse oder TK-Anlagen, werden hier zusammengefaßt.

Zur Verbindung der Netzwerkssimulation NS und der Terminalsimulation TS, das heißt der zugehörigen D-Kanal-Software, ist eine D-Kanal-Steuerung DKS vorgesehen. Diese nimmt die Anreize der beiden Seiten entgegen und meldet sie gegebenenfalls an die Gegenseite, so daß ein Durchschleifen beziehungsweise Durchschalten der relevanten Daten bewirkt wird. Die Daten werden in bekannter Weise im B-Kanal beziehungsweise in den B-Kanälen übertragen.

Die D-Kanal-Steuerung DKS steht auch in Verbindung mit einer Bedienoberfläche BOF, über die eine Bedienung des Schlüsselgerätes SG möglich ist. Die Bedienoberfläche BOF weist hierzu beispielsweise nicht näher dargestellte Tasten- und Anzeigeeinrichtungen auf. Die D-Kanal-Steuerung DKS baut auf Anforderung selbständig Verbindungen auf und hält, wenn nötig, die Verbindung zu einer der beiden Seiten. Es können mehrere Verbindungen gleichzeitig abgewickelt werden.

Zur Verschlüsselung der Daten, insbesondere der Sprachdaten, ist beispielsweise die D-Kanal-Steuerung DKS mit einem Kryptoschaltkreis KS verbunden. Die D-Kanal-Steuerung DKS ist für die Ansteuerung des Kryptoschaltkreises KS zuständig. Der Kryptoschaltkreis KS sorgt sendeseitig für die Verschlüsselung und empfangsseitig für die Entschlüsselung des jeweils entsprechenden Datenstromes, der in den jeweiligen B-Kanälen übertragen wird. Diese B-Kanäle sind in der Figur nicht explizit dargestellt, da die eigentliche Verschlüsselung als bekannt angesehen werden kann.

Bei dem erfindungsgemäßen Schlüsselgerät SG ist die Verbindung des Schlüsselgerätes SG zur Vermittlungseinrichtung VE, das heißt zum ISDN-Netz, vollständig von der unverschlüsselten Verbindung des Schlüsselgerätes SG zum Endgerät EG entkoppelt. Für die beiden Verbindungen können unterschiedliche Dienstmerkmale verwendet werden. Die Verbindung zwischen den Schlüsselgeräten SG über das ISDN-Netz hinweg erfolgt in dem dafür optimalen sogenannten UDI-Mode und es bestehen keinerlei Einschränkungen für die Dienste des Endgerätes. Die Verbindungssicherheit ist hierdurch stark erhöht. Im UDI-Mode werden digitale Daten übertragen, die keiner Veränderung bei der Übertragung im ISDN-Netz unterworfen werden.

Bei der Verwendung des erfindungsgemäßen Schlüsselgerätes SG können außerdem noch vor dem Verbindungsaufbau zwischen den Schlüsselgeräten SG die Parameter für eine sichere Kommunikation automatisch aktualisiert werden. Hierzu kann eine eigenständige Verbindung zu einer vertrauenswürdigen Instanz, beispielsweise einem Administrator, aufgebaut werden.

Die vertrauenswürdige Instanz kann durch diesen Administrator oder auch durch eine als Trustcenter bezeichnete Instanz realisiert sein.

## Patentansprüche

1. Schlüsselgerät (SG) für ISDN-Endgeräte (EG)
mit ersten Mitteln (NS) zur Simulierung eines Netzwerkes zu einem Endgerät (EG) hin,
mit zweiten Mitteln (TS) zur Simulierung eines Endgerätes (EG) zu einem Netzwerk (VE) hin,
mit einer dazwischen geschalteten Steuerung (DKS) zur Abwicklung von Verbindungsaufgaben und zum Durchschalten der Daten, und
mit einer Einrichtung (KS) zu deren Verschlüsselung.
